**Europäisches Patentamt**

(19) **European Patent Office**

**Office européen des brevets**

(11) Veröffentlichungsnummer: **0 213 433**
**B1**

(12) # EUROPÄISCHE PATENTSCHRIFT

(45) Veröffentlichungstag der Patentschrift:
**26.10.88**

(51) Int. Cl.⁴: **F 16 L 33/02**

(21) Anmeldenummer: **86110789.4**

(22) Anmeldetag: **05.08.86**

(54) **Stutzen für den Anschluss eines Schlauchendes, insbesondere für Kühlmittel-Schläuche von Brennkraftmaschinen.**

(30) Priorität: **08.08.85 DE 3528560**

(43) Veröffentlichungstag der Anmeldung:
**11.03.87 Patentblatt 87/11**

(45) Bekanntmachung des Hinweises auf die Patenterteilung:
**26.10.88 Patentblatt 88/43**

(84) Benannte Vertragsstaaten:
**AT DE FR GB IT SE**

(56) Entgegenhaltungen:
**DE - C - 2 851 965**
**US - A - 2 198 996**

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Melzer, Hans Harald, Prof. Dr.-Ing., Erlenstrasse 16, D-8401 Pentling (DE)**
Erfinder: **Michassouridis, Athanasios, Dipl.-Ing., Landsberger Strasse 103, D-8000 München 2 (DE)**
Erfinder: **Bachofner, Reiner, Carl-von-Linde-Strasse 8 c, D-8044 Lohhof (DE)**
Erfinder: **Espitte, Achim, Dipl.-Ing., Knorrstrasse 21, D-8000 München 40 (DE)**

(74) Vertreter: **Schweiger, Erwin et al, c/o Bayerische Motoren Werke AG - AJ-35 Postfach 40 02 40 Petuelring 130, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Stutzen für den Anschluss eines Schlauchendes, insbesondere für Kühlmittel-Schläuche von Brennkraftmaschinen, einer Bauart gemäss den Merkmalen des Oberbegriffs des Anspruches 1.

Ein durch die GB-A-792 029 und die DE-C-2 851 965 bekannter Stutzen dieser bzw. ähnlicher Bauart weist dem Stutzenende zugewandte radiale Flanken und kaum gerundete Übergänge an den Rillen-Spitzen und -Tälern auf, die die Schlauch-Innenfläche bei Dauerbelastung zerstören. Die GB-A-792 029 enthält keine Angaben über die Funktion des dargestellten Ringrillenprofils. Die gemäss DE-C-2 851 965 relativ grosse Tiefe der Ringrillen begünstigt zusätzlich durch starke Verformung der Schlauch-Innenfläche den frühzeitigen Verschleiss der Schlauchverbindung am Stutzen. Die in der DE-C-2 851 965 beschriebene Ausbildung des Rillenprofils mit radialen Flanken ist zur Sicherung der erläuterten, aber unzutreffenden Funktion dieser Schlauch-Befestigung begründet, wonach sich die Schlauch-Innenfläche an die radiale Flanke dichtend anlegen soll. Da aber eine derartige A nlage durch die alleinige Wirkung einer Schlauchschelle nicht erreichbar sein kann, dringt das abzudichtende Fluid auch in den im Bereich der radialen Flanke unvermeidbaren, nach aussen sich verjüngenden Ringspalt ein, so dass der Fluid-Druck sich auch in diesem Spalt gleichzeitig aufbaut und keine Anlage der Schlauch-Innenfläche an die radiale Flanke des Ringrillen-Profils bewirken kann. Die in Versuchen festgestellte sichere Dichtwirkung derartiger Stutzen mit umgekehrtem Sägezahnprofil beruht vielmehr auf der Keilwirkung der flach konischen Profil-Flanken in Verbindung mit der Abziehwirkung des Fluid-Druckes auf den Schlauch. Dabei wird der Schlauch auch bei durch elastische oder plastische Verformung und/oder durch Temperaturabfall bedingter Materialschrumpfung gelockerter Verspannung bis zum Abgleiten immer wieder auf den flachen konischen Profil-Flanken dichtend zwischen Stutzen und Schlauchschelle verklemmt.

Aufgabe der Erfindung ist es, einen Stutzen mit einem derart geformten Profil der Ringrillen zu gestalten, dass sowohl die Dichtwirkung gesichert bleibt als auch eine Dauerbelastung ohne Zerstören der Schlauch-Innenfläche und damit ohne vorzeitigen Ausfall der Schlauch-Befestigung erreicht wird.

Zur Lösung dieser Aufgabe sieht die Erfindung die kennzeichnenden Merkmale des Anspruches 1 vor. Durch die relativ geringe Rillentiefe und den gegenüber dem 90°-Winkel einer radialen Flanke weniger steilen Winkel verringert sich die Verformung der Schlauch-Innenfläche so erheblich, dass deren Dauerhaltbarkeit nicht mehr beeinträchtigt ist. Die eingangs beschriebene sichere Dichtwirkung der flach konischen Profil-Flanken aus deren Keilfunktion in Verbindung mit dem den Schlauch zum Stutzenende hin ziehenden Fluid-Druck bleibt von der erfindungsgemässen Gestaltung der steilen Profil-Flanken unbeeinflusst und voll wirksam.

Eine sowohl funktionell als auch fertigungs-technisch besonders vorteilhafte Form und Bemessung der Ringrillen beinhalten die Merkmale des Anspruches 2. Die Übergänge der Profilflanken weisen dabei die zur Tiefe der Ringrillen und zu den Winkeln der Profilflanken grösstmögliche Abrundung auf. Die Schlauch-Innenfläche wird dadurch besonders gering verformt und belastet. Ferner ermöglichen die Rundungsradien von 1 mm die Anwendung üblicher Bearbeitungswerkzeuge, die die gleichen Rundungsradien aufweisen. Die geringe Tiefe der Ringrillen und deren Anordnung ermöglicht schliesslich auch noch eine relativ geringe Wandstärke der Stutzen bei hoher Festigkeit und die Anwendung derartiger Stutzen bei mit Rücksicht auf die Schlauch-Wandstärken geringstmöglichen Abständen zwischen benachbarten Stutzen.

In der Zeichnung ist ein Ausführungsbeispiel der Erfindung dargestellt. Es zeigen:

Fig. 1 einen Stutzen mit einem mittels einer Schlauchschelle befestigten Schlauchende für Fluid-Leitungen, wie beispielsweise Kühlmittel-Leitungen von Brennkraftmaschinen, und

Fig. 2 einen Teilschnitt des Stutzens nach Fig. 1 in vergrösserter Darstellung und mit zur Fig. 1 gegensätzlicher Aufschubrichtung (Pfeil) des Schlauches.

Auf einen Stutzen 1 ist ein Schlauch 2 in Richtung eines Pfeiles 3 aufgeschoben und mittels einer Schlauchschelle 4 unter radialer Verspannung befestigt. Der Stutzen 1 besteht aus Metall, Kunststoff oder ähnlichem festen Werkstoff. Der Schlauch 2 besteht aus einem gewebeverstärkten Elastomer und ist entsprechend elastisch sowie zum Teil auch platisch verformbar. Als Anschlag für das Schlauchende 2' weist der Stutzen 1 einen radialen Flansch 5 auf, der entweder auch zur Befestigung an einem weiteren Bauteil dient oder Bestandteil eines Bauteiles ist, in dem sich die Fluid-Leitung 6 vom Schlauch 2 und Stutzen 1 fortsetzt. Der Stutzen 1 weist für die kraft- und formschlüssige Befestigung des Schlauches 2 mehrere Ringrillen 7 auf, die ein gerundetes sägezahnförmiges Profil bilden. Bei einem etwa 20 bis 50 mm Aussen-Durchmesser aufweisenden Stutzen 1 beträgt die Tiefe der Ringrillen 7 sowie die Rundungsradien R der Rillen-Spitzen und -Täler jeweils 1 mm. Dadurch ergibt sich an den steilen Profil-Flanken 8 ein unter einem Winkel von 60° zur Mittellachse 1' des Stutzens 1 unmittelbarer Übergang der konvexen und konkaven Rundungsradien R ineinander. Für die Profil-Flanken 9 ergibt ein Winkel von 30° zur Mittelachse 1' relativ grosse konische Abstützflächen für die Schlauch-Innenfläche 2''.

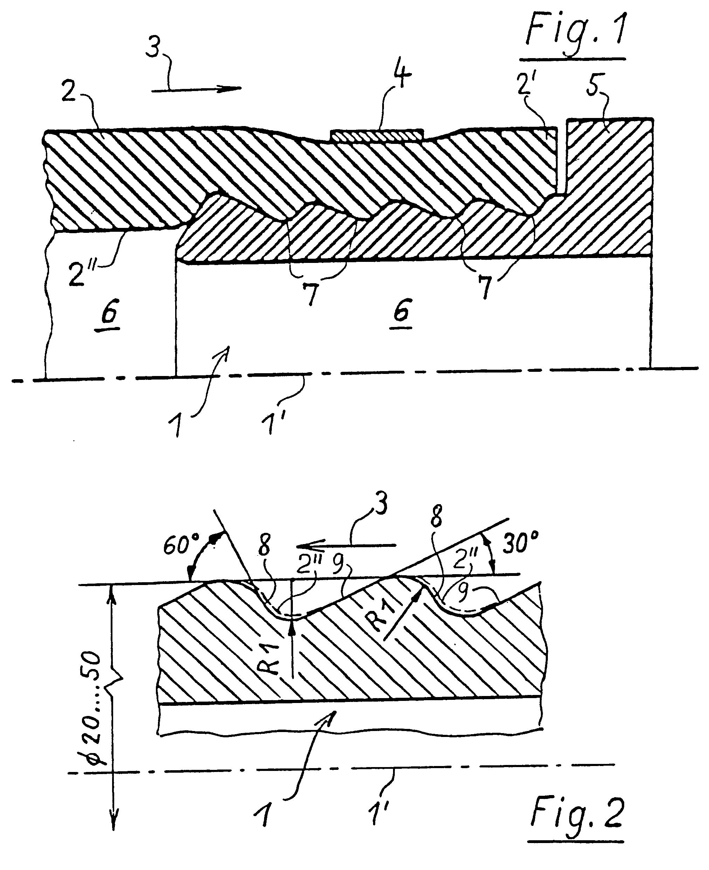

Bei einer Druckbelastung der Schlauchbefestigung durch einen Fluid-Druck, der sowohl auf die Schlauch-Innenfläche 2'' aufweitend als auch als abziehende Kraft entgegen der Aufschubrichtung nach Pfeil 3 wirkt, wird der Schlauch 2 mittels der Schlauchschelle 4 in den Rillen 7 gehalten und durch die Anpresskraft an den äusseren konvexen Rundungsradien R wirksam abgedichtet. Die geringe Tiefe und die sanften Rundungsradien der Rillen 7 von je 1 mm erfordern eine nur geringe Verformung der Schlauch-Innenfläche 2'', wodurch eine hohe Dauerhaltbarkeit der Schlauchverbindung erreicht wird. Durch die konischen Abstützflächen der flachen Profil-Flanken 9, die entgegen der Schlauch-Aufschubrichtung gemäss Pfeil 3 abfallen und damit in Richtung der abziehenden Kraft aus dem Fluid-Druck ansteigen, wird eine sichere Dichtwirkung der Schlauchverbindung auch dann gewährleistet, wenn die Verspannung des Schlauches 2 zwischen Stutzen 1 und Schlauchschelle 4 aufgrund plastischer Verformung des Schlauches 2 und/oder Schrumpfung durch Kälteeinwirkung abfällt. Dabei zieht die abziehende Kraft die Schlauch-Innenfläche 2'' gegen die konischen Abstützflächen der flachen Profil-Flanken 9 und verkeilt auf diese Weise den Schlauch 2 immer wieder zwischen dem Stutzen 1 und der Schlauchschelle 4. Dabei hebt sich die Schlauch-Innenfläche 2' gemäss der gestrichelten Linien 2'' in Fig. 2 zwar von den steilen Profil-Flanken 8 und von den Rundungsradien R der Rillen-Täler ab, ohne jedoch die Dichtwirkung vor einem vollständigen Abgleiten des Schlauches 2 vom Stutzen 1 infolge überlanger Alterung des Schlauchmaterials zu verlieren.

Das erfindungsgemässe sägezahnförmige Profil der Ringrillen 7 des Stutzens 1 weist auch fertigungstechnische Vorteile auf. Es ist durch seine Rundungsradien R1 mit üblichen Profil- und Kopier-Drehwerkzeugen rationell herstellbar. Dies ist sogar bei eng benachbarten Stutzen möglich, die einen gleichen oder wenig grösseren Abstand als die Summe der beiden Wandstärken der darauf zu befestigenden Schläuche aufweisen. Auch eine Ausformung in Kunststoff und anderen Guss- und Spritz-Werkstoffen ist vorteilhaft möglich, so dass derartige Stutzen verschiedenen Bauteilen, wie Kühler-Wasserkästen, Thermostat-Gehäusen, Kühlmittelpumpen-Gehäusen und Leitungsverzweigungs-Bauteilen in einfacher Weise anformbar sind.

**Patentansprüche**

1. Stutzen für den Anschluss eines Schlauchendes, insbesondere für Kühlmittel-Schläuche von Brennkraftmaschinen, mit mehreren Ringrillen (7), die ein etwa sägezahnförmiges Profil, dem freien Ende des Stutzens (1) abgekehrte, relativ flach abfallende konische und entgegengesetzte steile Profil-Flanken (9 bzw. 8) sowie ein relativ geringes Verhältnis von Ringrillen-Tiefe zu Stutzen-Aussendurchmesser aufweisen, dadurch gekennzeichnet, dass die Tiefe der Ringrillen (7) zum Aussen-Durchmesser des Stutzens (1) ein Verhältnis von etwa 1:20 bis 1:50 aufweist und dass die steilen Flanken (8) mit der Mittelachse (1') des Stutzens (1) einen Winkel von etwa 45 bis 75° einschliessen.

2. Stutzen nach Anspruch 1, dadurch gekennzeichnet, dass die Tiefe der Ringrillen (7) 1 mm beträgt, dass die konischen Profil-Flanken (9) einen Winkel von 30° aufweisen und dass die Rillen-Spitzen und die Rillen-Täler je einen Rundungsradius (R1) von 1 mm aufweisen, die in den steilen Profil-Flanken (8) bei einem Winkel von 60° unmittelbar ineinander übergehen.

**Claims**

1. A connector for the attachment of a hose end, especially for coolant hoses of internal combustion engines, having a plurality of annular channels (7), which have a profile of approximately saw-tooth form, with relatively gently falling profile flanks (9) directed away from the free end of the connector (1) and opposite steep profile flanks (8), and a relatively small ratio of annular channel depth to the external diameter of the connector, characterised in that the depth of the annular channels (7) has a ratio of about 1:20 to 1:50 in relation to the external diameter of the connector (1), and that the steep flanks (8) make an angle of about 45° to 75° with the central axis (1') of the connector (1).

2. A connector according to Claims 1, characterised in that the depth of the annular channels (7) amounts to 1 mm, that the conical profiled flanks (9) have an angle of 30°, and that the channel peaks and the channel troughs each have a radius (R1) of curvature of 1 mm, which radii merge directly into one another in the steep profiled flanks (8) at an angle of 60°C.

**Revendications**

1. Embout pour le raccordement d'un tuyau souple, en particulier pour des tuyaux souples d'agent de refroidissement d'un moteur à combustion interne, comportant plusieurs gorges annulaires (7) qui présentent un profil à peu près en dents de scie dont les flancs du profil s'abaissent en forme de cône relativement aplati du côté de l'extrémité libre de l'embout (1) et de façon abrupte du côté opposé (9) et (8), un rapport relativement de faible profondeur des gorges annulaires — diamètre extérieur de l'embout, caractérisé en ce que la profondeur des gorges annulaires (7) par rapport au diamètre extérieur de l'embout (1) présente un rapport d'environ 1:20 à 1:50, et en ce que les flancs abrupts (8) comprennent avec l'axe médian (1') de l'embout (1) un angle d'environ 45 à 75°.

2. Embout selon la revendication 1, caractérisé en ce que la profondeur des gorges (7) atteint 1 mm, que les flancs du profil coniques (9) présentent un angle de 30°, et que les pointes de gorges et les fonds de gorges présentent un rayon de courbure (R1) de 1 mm qui se transforme immédiatement en flancs à profil abrupt par un angle de 60°.

*Fig. 1*

*Fig. 2*